# EUROPEAN PATENT SPECIFICATION

(11) **EP 0 368 927 B1**
(45) Date of publication and mention of the grant of the patent: **05.01.2000**
(21) Application number: 88907472.0
(22) Date of filing: 29.07.1988
(51) Int. Cl.: C08K 7/06, C08K 7/10, C08L 61/12

(54) **METHODS FOR THE MANUFACTURE OF FIRE-RESISTANT REINFORCED PLASTIC MATERIAL AND ARTICLES**
VERFAHREN ZUR HERSTELLUNG FLAMMWIDRIGER VERSTÄRKTER KUNSTSTOFFMATERIALIEN UND GEGENSTÄNDE
PROCEDES DE FABRICATION DE MATIERE PLASTIQUE RENFORCEE RESISTANT A LA FLAMME ET D' ARTICLES FABRIQUES DANS CETTE MATIERE

(30) Priority: 30.07.1987 US 79676; 04.09.1987 US 92892
(43) Date of publication of application: 23.05.1990
(73) Proprietor: SHEA TECHNOLOGY, Reno, Nevada 89509 (US)
(72) Inventor: SHEA, Lawrence E., San Bruno, CA 94066 (US)
(74) Representative: Casalonga, Axel
(86) International application number: US8802603
(87) International publication number: WO8901013

(56) References cited:
- US-A- 3 133 034
- US-A- 3 389 125
- US-A- 4 053 447
- US-A- 4 107 127
- US-A- 4 309 527
- US-A- 4 608 408
- A. Knop, W. Scheib, "Chemistry and Application of Phenolic Resins", 1979, Springer-Verlag, Berlin, Heidelberg, New York, p. 13

## Description

### SPECIFICATION

This invention relates to improvements in methods for making fire-resistant materials from fibers and plastics and articles made therefrom.

### Background of the Invention

The present invention may be considered an improvement over my earlier patent No. US-A-4,107,127. The invention described there related to resins and glass-fiber-reinforced ducts and other articles made therefrom. The resins were products made from resorcinol and formaldehyde, and in some instances incorporating phenol.

There are advantages to using resins that have a higher percentage of solids than was present in my earlier invention. Typically in U.S. Patent 4,107,127 the resin had about 42% solids, the non-volatiles could be raised up to slightly over 64% solids, but not beyond that.

There are advantages, however, in having solids contents from the mid-60%'s to the lower 80%'s. The problem with having such higher solids content has been that such resins tended to be too viscous, and its application to the fibers became difficult or inconsistent. Particularly when working such with fibrous materials as glass fibers and glass fiber cloth, the glass did not tend to wet out properly when high-solids-content resins were used. It is generally not desirable to obtain higher solids content simply by adding fillers, but whether the resin itself has high solids content or fillers are added, the problem is there is too high a viscosity for the product to be of practical use.

In the earlier patent and in products made in further developing the patented invention, higher solids content was achieved by reacting the components to produce a polymeric syrup having around 64% - 83% non-volatiles or solids. However the viscosity of such a syrup was about 1 to 3 Pa·s (1,000 to 3,000 centipoises). The high viscosities made it difficult to use the resultant resin for wetting out or saturating glass fiber materials, especially when paraformaldehyde (the preferred aldehyde), was used alone as the source of the additional formaldehyde needed for room temperature cure. This problem occurred particularly in the use of filament winding roving, where a resin bath container was filled with the resin mixture and glass strands were drawn through the resin mix to wet each strand with the resin. The strands were then drawn onto a rotating mandrel or tool which might be of various shapes, including round, square, and rectangular. The viscosity of the liquid and the velocity of the strands through the resin mix created a back pressure or pull on the glass strands which tended to be so large that it exceeded the tensile strength of the strands, and the strands broke. Thus, it became difficult, if not impossible, to create a finished product from such strands. When fillers of various sorts were added to resin mixes to provide even higher solids content, in order to compensate for the shrinkage of the resin mix as the volatiles evaporated, those fillers compounded the difficulties by further increasing the viscosity of the resin mix.

Thus, it is an object of the present invention to provide a method of making a fiber-and-resin material and articles made therefrom which have high solids content but also have workable viscosities at the time of manufacture and, in addition, impart to the finished material high flame resistance and low smoke evolution.

Another object of the invention is to provide a method which enables practical application of these high solids content, fire-resistant materials.

Another object of the invention is to provide a way of reducing the viscosity of the fire-resistant resins during manufacture of fiber-reinforced sheets and shapes without unduly lowering the solids content, so that desirable products can be produced.

Therefore, the present application is directed to a method of making a reinforced, fire-resistive, resinous structural material exhibiting good heat release, low flame spread and low smoke evolution (i.e. meeting the standards according to ASTM-E 84) when exposed to direct flame or to radiant heat and being resistant to embrittlement and cracking upon curing, comprising
(1) preparing a novolac resin-composition consisting essentially of
   (a) a hydroxy-group-providing component chosen from the group consisting of resorcinol and a mixture of resorcinol and phenol containing not over 2 mols phenol per 1 mol resorcinol,
   (b) a solvent-carried first aldehyde component whereby enough aldehyde is provided with respect to said component (a), to produce a novolac resin therewith, having a solids content of 64 - 83% non-volatiles and a viscosity of 0.3 - 3 Pa.s (300 - 3000 centipoises),
(2) Adding to said novolac resin
   (c) an organic viscosity-reducing solvent for reducing the viscosity of the mixture of a mixture of (a), (b), and (c) to a viscosity between 0.25 and 0.55 Pa.s (250 and 550 cps), and
   (d) a second aldehyde component to bring the components ts (a), (b), and (c) to a prompt cure, and said aldehyde solids being present in an amount of from 5% to 12% by weight of the total of said components (a) and (b),
   without reducing the solids content by more than 3%,
(3) saturating a substantially non-flammable fibrous reinforcement material with the resinous material resulting from step (2),
(4) pressing said saturated fibrous reinforcing material to remove air and excess resinous composition, and
(5) curing said resin remaining in said saturated fibrous reinforcing material, at from room temperature to 105°C., to form said structural material.

The invention further relates to a method of making a fire-resistive shaped product including tanks, ducts and pipes, which comprises:
(1) coating glass-fiber roving with an admixture of resorcinol or phenol-resorcinol and aldehyde and organic viscosity reducer at a solids content higher than 60% and a viscosity between 0.25 and 0.55 Pa.s (250 and 550 centipoises),
(2) forming filaments of such coated roving,
(3) winding said filaments on a form or mold to produce a shaped product,
(4) curing said admixture to form of said admixture a tough, fire-resistive shaped product exhibiting low flame spread and low smoke evolution when exposed to direct flame and being resistant to embrittlement and cracking upon curing, and
(5) removing said cured product from said form or mold.

The present application also relates to a method of making a fire-resistive duct which comprises
coating glass roving with an admixture consisting essentially of:
   (a) a partially cured resin of phenol, resorcinol and formaldehyde or paraformaldehyde (b) aldehyde, and (c) a viscosity-reducing organic solvent for resulting in a high solids content of more than 60% nonvolatiles at a viscosity between 0.25 and 0.55 Pa.s (250 and 550 centipoises),
said aldehyde being added in sufficient amounts to equal or to exceed one mole ratio with respect to the phenolic hydroxyl radicals available to produce, after curing, a tough, fire-resistive coating,
forming filaments of such coated roving,
spiral winding said filaments to form said duct and allowing said coating to cure to form a tough, fire-resistive duct exhibiting low flame spread, and low smoke evolution when exposed to direct flame or to radiant heat and being resistant to embrittlement and cracking upon curing.

### Summary of the Invention

According to the present invention, suitable binders, with a high percentage of solids, can be produced from condensation products of resorcinol (with or without phenol as a co-reactant) and formaldehyde or paraformaldehyde, or both, in the alkaline state and in the presence of water. This new resin may be combined with various fiber products such as, but not limited to, random mat, "C"-veil, organic veils, woven roving, and filament winding or chopper roving. The fibers may be made from glass, carbon, or graphite fibers, or other such fire-resistant fibers, and achieve an end product which is exceptionally fire resistant and exceptionally low in any tendency to produce smoke. The resin may or may not contain fillers of various sorts.

Formaldehyde is present in the resin at a novolac mol ratio, i.e., sufficient to provide a substantially equivalent amount with respect to the phenolic hydroxyl radicals available, but less than 1 mol ratio. The principal components and conditions are parallel to those reported in my earlier patent US-A-4,107,127, but act to extend the ranges of the materials so that resin compositions of higher solids content including higher weight percentages of resorcinol may be used.

In the present method, there are two applications of formaldehyde to achieve the needed mixture of formaldehyde with the resorcinol or phenol resorcinol. An initial amount is used to make the polymeric syrup and then, later and as an additional step, a different mixture of formaldehyde is used.

This may be done while also adding a viscosity-reducing solvent, or the solvent may be added first, reducing the viscosity before separately adding the additional formaldehyde component.

Thus, there are two methods of introducing the formaldehyde/solvent components to achieve the desired results. The first is to introduce them simultaneously and in conjunction with each other at the time of final use or application to fibrous materials.

This later mixture almost instantly and dramatically reduces the viscosity of the resin mixture while only slightly reducing its solids content. The dramatically reduced viscosity at once acts to enable the combination of the resin system with the fiber materials and even enables the addition of fillers, if desired, to make finished sheets or products of various configurations. No external heat is required to effect the cure of the product, which cures at ambient temperature, though heat may be used advantageously to accelerate the process of cure when that is desirable.

The second method of adding the solvent and later the additional formaldehyde component is to apply them sequentially, i.e., use the solvent at a point prior to final application or use to reduce viscosity, and the use of the added formaldehyde at the time of application to fibrous materials to effect cure. Both methods are discussed herein.

A novolac resin is formed by the initial steps of mixing the phenol, if used, resorcinol, and aldehyde (whether actually formaldehyde or paraformaldehyde or a mixture) and pre-reacting them to a point where minor deficiencies of formaldehyde prevent the resin from actually curing to completion. This is similar to what is done in my earlier patent US-A-4,107,127, except that during this stage (the so-called "B" stage) in the present invention, the volatile solvents present are greatly reduced in amount, in order to produce a high solids content novolac resin. The resin system at this stage may have a viscosity of 0.3 to 3.5 Pa.s (300 to 3,500 centipoises), and have about 64% to 83% of non-volatiles or solids. The resin system is alkaline and is based on the use of various inorganic hydroxides as catalysts. An important problem is how to add the formaldehyde needed in order to initiate the final cure desired, without having the added formaldehyde result in a viscosity that prevents the material from becoming unworkable.

A key feature of the invention is the use of a mixture or solution of formaldehyde, e.g., the one commonly known as Methyl Formcel which contains formaldehyde solids and a lower alcohol and achieves the further addition of formaldehyde needed to enable the final cure to begin, and at the same time, to reduce the viscosity of the total mixture. The mixture, when properly made, provides the necessary quantity of formaldehyde to enable the achievement of the necessary mol ratio for curing, and simultaneously, causes the viscosity to drop to the range of 0.25 to 0.3 Pa.s (250 to 300 centipoises) almost instantly, even with very little mixing. The mixture of the formaldehyde with the lower alcohol and perhaps an alkoxy composition is what achieves these phenomena. Liquid aqueous 37% formaldehyde would cause excessive and extreme viscosity reductions, making the mixture unusable for many applications.

One preferred form of one such mixture of formaldehyde and a lower alcohol is a mixture of about 55% liquid formaldehyde, about 35% methanol, and about 10% methoxymethanol. This mixture is sold commercially as "Methyl Formcel". Either, Methyl Formcel or Methaform may be used, with equal beneficial results. A second such source of added formaldehyde is a mixture of around 55% liquid formaldehyde, 35% methanol, and 10% water, sold commercially as Methaform. Either may be used at a rate of 10% to 19% of the novolac resin. A similar composition might be to use, to 100 part of the novolac resin, 11 parts of paraformaldehyde and 4 to 9 parts of methanol. In place of the methanol, with or without methoxymethanol, other organic viscosity reducing agents, like lower alcohols and alkoxy compositions may be used, including ethanol, ethyloxyethanol, and butanol with an alkoxy butanol, but the mixtures thereof with formaldehyde are often not feasible. For example, a commercially available mixture of butanol with 35% formaldehyde content, the only butanol-formaldehyde mixture at present commercially available, not only has a repulsive smell, but also is too low in formaldehyde content, so that in order to achieve adequate HCHO addition a large amount must be used, causing excessive reduction in viscosity, similar to what results from use of 37% aqueous formaldehyde.

With the proper formaldehyde-lower alcohol mixture with either water or methoxymethanol included, the solids content of the resin is reduced only slightly --to about 62% to about 81%, from the original 64% to 83% range--while the viscosity is reduced from about the original 0.3 to 3.5 Pa.s (300 to 3500 c.p.s.) to about 0.25 to 0.55 Pa.s (250 to 550 c.p.s.). The methoxymethanol and methanol, or other such compositions, thus function as a powerful solvent for the phenol-resorcinol-formaldehyde premix while producing workable viscosities.

The ratios used are based on the weight of components. Typical ratios are about 10 to 19 parts-by-weight of the formaldehyde-methanol-methoxymethanol mixture to about 100 parts of the novolac resin of resorcinol and formaldehyde, or resorcinol, phenol, and formaldehyde. The formaldehyde-methanol-methoxymethanol mixture, not only completes the reaction, but enables the binder system to be easily applied to the fibers and also enables the addition of various fillers. The proper molar ratios enable ambient temperature cure of the product.

The second means of achieving the same result --i.e., first viscosity reduction to a desired level and then adding the formaldehyde component later, is to prepare a novolac premix of resorcinol formaldehyde or phenol-resorcinol-formaldehyde binder, and after the reaction of these materials to a point of developing a polymeric syrup slightly deficient in formaldehyde, i.e., a novolac with less than one mol ratio, thereafter add a solvent to reduce said high solids binder from a level of 0.3 to 3.5 Pa.s (300 to 3500 centipoises) to 0.25 to 0.55 Pa.s (250 to 550 centipoises); and thereafter, at the time of final usage or application, adding the necessary additional formaldehyde to equal to exceed one mol ratio, which converts the novolac to a resole, thereby effecting cure. Both methods are illustrated in this specification.

### Some Preferred Embodiments of the Invention

Several kinds of products and various mixes of materials can be used. An overall description of the composition of the resin is as follows:

**TABLE 1**

| Workable Ranges of Components | |
|---|---|
| Part A (Novolac Resin) | |
| Ingredients | Parts by Weight |
| Resorcinol | 100 - 35 |
| Phenol | 0 - 40 |
| Formaldehyde (or paraformaldehyde) | 15 - 35 |
| Catalyst*-solvent** | 20 - 115 |
| | |
| Solids content: | 64% - 83% |
| Viscosity: | 300-3500 mPa.s (300 - 3500 c.p.s.) |

| Part B | |
|---|---|
| Formaldehyde | 7 - 11 |
| Paraformaldehyde | 5 - 12 |
| Lower alcohol*** | 4.6 - 6.7 |
| Alkoxy composition**** | 0 - 2 |
| Water | 0 - 2 |
| | |
| Solids content of mixture of parts A and B | 62% - 81% |
| Viscosity of mixture of Parts A and B | 250 - 550 mPa.s (250 -550 c.p.s.) |

| | |
|---|---|
| * inorganic hydroxide catalyst, e.g., sodium hydroxide, or, hydroxides of potassium, lithium, calcium, magnesium, aluminum, etc. | |
| ** water and/or low-molecular weight alcohols | |
| *** e.g., methanol, ethanol, isopropanol, etc. | |
| **** e.g., methoxymethanol, etc. | |

Several kinds of products and various mixes of materials can be used. Some specific binders are shown in Table 2, some examples of the application of a few high solids resins as castings and also use with fiberglass is shown in Table 3, and further application with the making of fiberglass shapes is shown in Examples 1 through 8 below.

**TABLE 2**

| Examples of Two Typical Resins | | |
|---|---|---|
| Part A | Parts by Weight in Relation to 100 units of Resorcinol | |
| Percent actual solids | 71 | 64 |

| Ingredients | | |
|---|---|---|
| Resorcinol | 100 | 100 |
| Phenol | 70 | 70 |
| Formaldehyde solids | 30 | 30 |
| Catalyst or solvent(s) | 50 | 115 |
| Methanol | 0 | 4 |
| Viscosity range mPa.s (cps) | 1500-3200 (1500-3200) | 300-450 (300-450) |

| Part B | | |
|---|---|---|
| Type | Liquid (1) | Powder (2) |
| Parts Formaldehyde Range (3) | 7 - 11 | 5 - 12 |

| Part C (4) | | |
|---|---|---|
| If lower alcohol only (5) | 4.6 - 6.7 | 4.6 - 6.7 |
| If mixture of lower alcohol and alkoxy or water | 4.6 - 8.6 | 4.6 - 8.6 |

| | At Time of Use | Prior to Use |
|---|---|---|
| Mixture of A & B and of C, when added Range | | |
| Percent solids | 68 - 69 | 61 - 62 |
| Viscosity mPa.s. (cps) | 250 - 500 (250 - 500) | 350 - 550 (350 - 550) |

| | | |
|---|---|---|
| (1) Solution of 55% formaldehyde, 35% methanol and 10% methoxymethanol or water. | | |
| (2) Powder paraformaldehyde, fine 95 - 97%. | | |
| (3) Additional formaldehyde solids required for ambient temperature cure based on 100 parts of part A liquid. | | |
| (4) Part C is methanol or other lower alcohol and methoxymethanol. | | |
| (5) Consists of methanol only. | | |

**TABLE 3**

| EXAMPLES OF CASTINGS AND FIBERGLASS | | | | | |
|---|---|---|---|---|---|
| Using High Solids Binder (71%) TABLE 2 as a Mix. All Quantities Shown Relate to 100 Parts of Part A Used With Various Sources and Quantities of Formaldehyde Solids. | | | | | |
| PART A | FORMCEL® | SOLID FORMALDEHYDE | MIX SOLIDS | MAT | CASTINGS |
| 100 | 10 | 5.5 | 69% | 1 ply 42.52 g (1.5 oz) no curl or cracks 11 days room temp. | NA |
| 100 | 13 | 7.15 | 69% | not released early - see above | OK at room temp. 12 days no cracks |
| 100 | 15 | 8.25 | 69% | NA | OK at room temp 12 days |
| 100 | 17 | 9.35 | 69% | NA | Cracked at room temp 2.5 hrs. |
| 100 | 19 | 10.5 | 69% | NA | See above 11 days |
| 100 | 11 para | 10.5 | 73% | curled and cracked | NA |

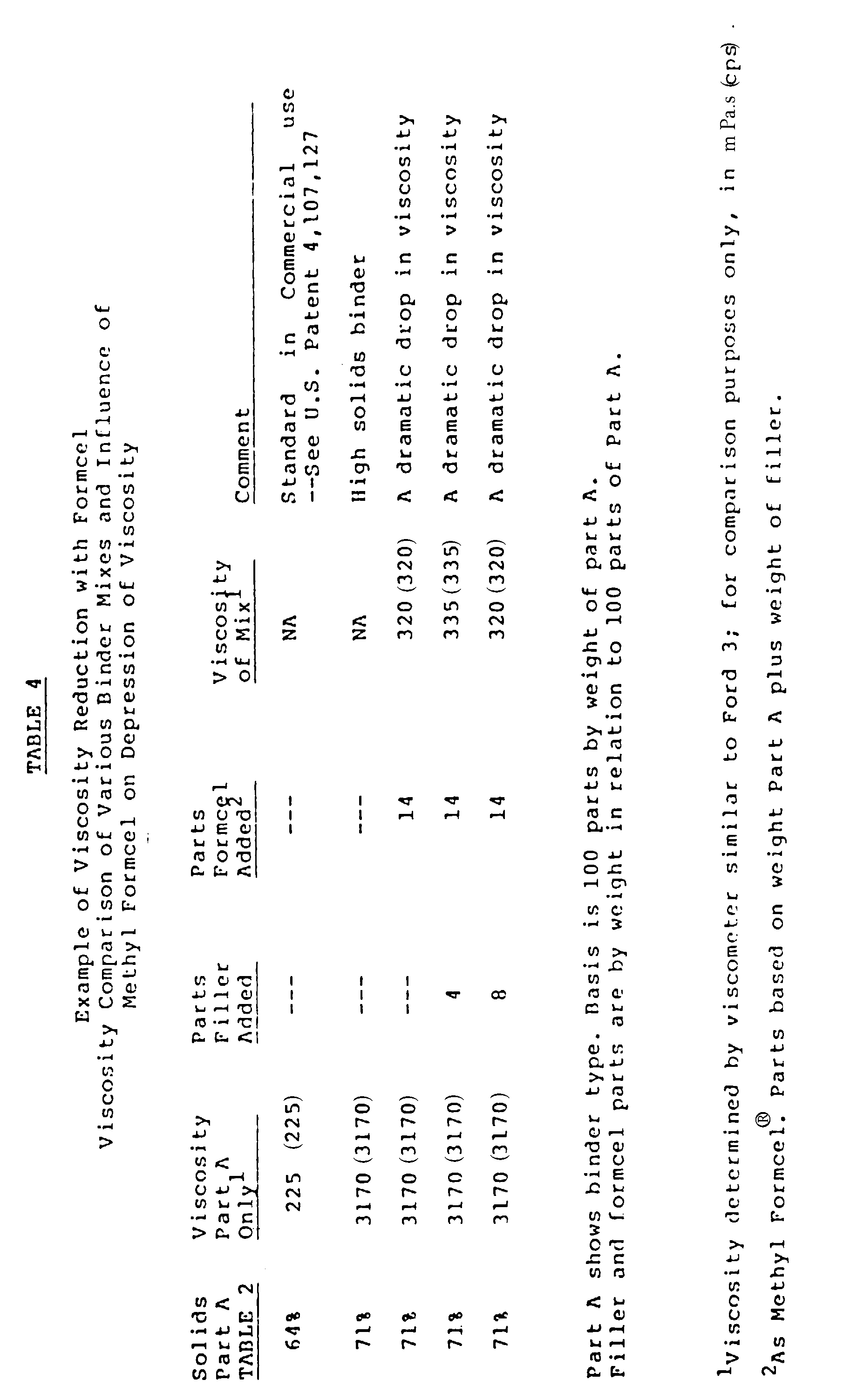

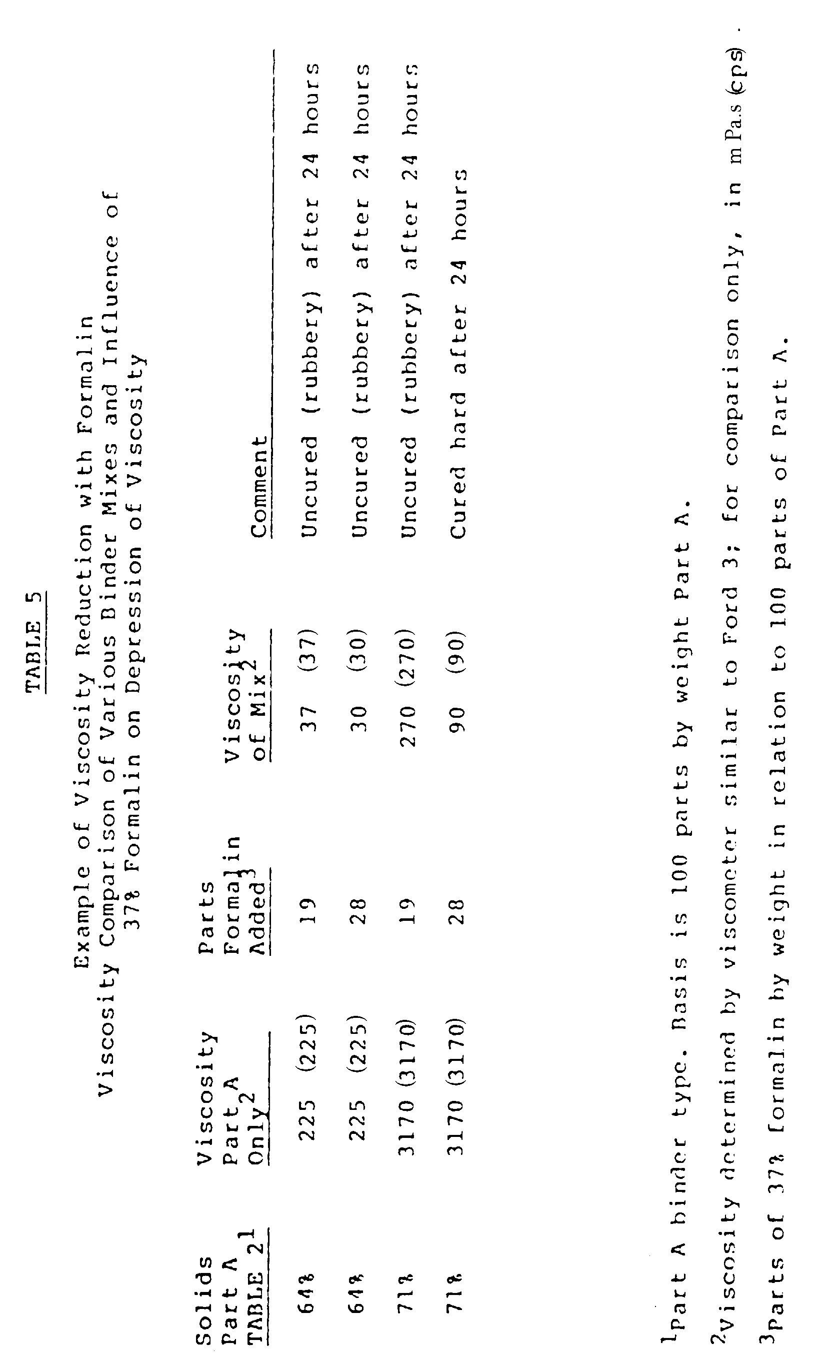

### Example 1

A flat sheet of reinforced resin of 64% solids Part A was made according to the present invention, as shown in Table 2 above.

Alternate layers of random fiber glass mat and glass woven roving were saturated with the resin resulting from mixture of 100 parts by weight of Part A and 10 parts Part B to a thickness of about 9.5 mm (3/8 inch). This material was then allowed to cure at ambient temperature and was cut into sections. The panels were sent to Factory Mutual Engineering in Norwood, Massachusetts, where tests were conducted according to ASTM E-84 protocol. Both flame spread and smoke development ratings were each 5. These are well within the limits of most building standards which specify flame spreads of less than 25 and smoke development of less than 50, and compare most favorably with alternate systems whose flame ratings may be as much as 200 and smoke development of 1500.

### Example 2

Various materials based on glass fibers were combined with the 64% solids resin mixture shown in Table 2 with a ratio of 100 parts of Part A and 12 parts of Part B.

A layer of chemical resistive grade glass veil (known usually as "C" glass veil) were saturated with the resin mix. Two layers of polyester veil are each saturated with the resin mixture, and then a single layer of random glass mat was saturated with the mixture. The combination of these layers was then formed into a 30.5 cm (12") duct, which was about 7.5 m (25') long and 3.2 mm (1/8") thick. A batch of the resin mixture was put into a suitable container known as a tub or a bath, through which 32 strands of glass fiber filament winding roving were drawn and were then gathered into a narrow band. The band was applied both circumferentially and helically on top of the prior glass materials, until all of the surfaces were thoroughly covered with the resin, incorporating the filament-wound glass fibers. Thereafter, a thin woven roving of glass fiber, commonly known as boat cloth, was placed over the filament winding, and then a final layer of resin saturated "C" glass veil was applied.

During the process it was noted that each of the materials was easily saturated with the resin mixture and that there was no problem in pulling the 32 strands of filament through the resin bath and of winding it on the duct. The resultant product was then allowed to cure at room temperature, and the part was taken out of the mold at that time. The result was a duct of great structural strength and rigidity.

Efforts were made to burn the completed pipe, using both propane and oxyacetylene torches, but no burning at all took place; it simply would not catch on fire. It was then shipped to Factory Mutual's Fire Research Test Laboratory in West Gloucester, Rhode Island, where it was tested for flame resistance under their test standard #4922. A fire of fifteen minutes duration was drawn into the duct, so that temperatures rose to 980°C to 1065°C (1800°F to 1950°F). The fire did not progress along the duct.

### Example 3

A rectangular mold was created in order to make a rectangular duct with walls about 6.4 mm (1/4") thick. The duct was 116.8 x 91.4 x 285 cm (46" x 36" x 9-1/2') long. The same fiber materials were used as in Example 2. All parts were coated with the resin mixture of 100 parts of 71% solids Part A and 13 parts of liquid Part B (See TABLE 2). The duct was then cured at room temperature for eight hours and was subsequently taken off the mold. This part was a commercially viable part, and showed great strength and rigidity. In fact, one can stand on such part without any deformation of the flat walls. Again, the material could, not be set on fire by application of either a propane or oxyacetylene torch.

### Example 4

A 90° elbow which was 30.5 cm (12") diameter with walls 3.2 mm (1/8") thick was constructed, combining the same resin mixture as cited in Example 3 above, except that 15 parts of Part B were used per 100 parts of Part A, and some of the fiber materials, except that no final layer of boat cloth and no final layer of "C" glass veil were used. The part was cured at room temperature, and again a rigid commercially viable part was made, which did not burn when tested with either the oxyacetylene torch or the propane torch.

### Example 5

A transition fitting, going from one rectangular shape to another, was made in this example. At one end the part was 91.4 x 40.6 cm (36" x 16") and at the other end it was 81.3 x 61 cm (32" x 24"). The whole part was 60 cm (2') long. The same resin mixture as in Example 4 was used, in combination with various layers and sequences of glass fiber materials. These were (1) a single layer of "C" glass veil, (2) two layers of polyester veil, and (3) alternate layers of random glass fiber mat, there being four such layers in total, interlayered with glass woven roving, of which there were three layers all together. This part was then allowed to cure at ambient temperature for six hours. Again a substantial part was achieved which was rigid and which would not burn even on the application of the propane and oxyacetylene torches thereto.

### Example 6

A 35.6 cm (14") round duct 6 m (20 feet) long and 3.2 mm (1/8") thick was made as follows: The initial layers of C glass veil, polyester veils and random glass mat were saturated with resin as used in Example 3 except 13 parts of Part B were used: subsequent layers of filament winding, boat cloth and exterior C glass veil were saturated with resin using 64% solids resin with 10 parts of paraformaldehyde to 100 parts of Part A as shown in Example 3. The part was stripped from the mold after curing. An oxyacetylene torch was applied to the part; it would not start on fire nor was any smoke visible.

### Example 7 (not belonging to the invention)

A flat sheet part was made with 100 parts 71% solids Part A from TABLE 2, substituting 19 parts of 37% aqueous formaldehyde for the Part B component, this being the only source of added formaldehyde. The mix was depressed in viscosity for saturation but the part did not cure when using an equivalent weight of HCHO as used in the above examples. (See TABLE 5.)

### Example 8

Flat laminates were made from "C" glass veil, random glass mat and glass woven roving to 6.4 mm (1/4") thickness. The resin mixture was made as described above in Examples 4 and 5 (71% solids) but consisted of 100 parts by weight of Part A and 16 parts by weight of Part B. The fiber parts were all saturated with the resins, and application was made similarly to Example 1. The parts were then allowed to cure at room temperature and were cut and trimmed and sent to the Fire Research Laboratory of Factory Mutual Engineering at Norwood, Massachusetts for flammability testing. This laboratory previously tested the material resulting from the practice of U.S. Patent 4,107,127. The laboratory made a parallel plate fire test and could find no difference from tests they had done before on similar laminates tested under that patent. The opinion of the laboratory was reported as being that the panels had equivalent fire resistance and low smoke evolution.

### Example 9

A 213.4 cm (84") diameter by 3m (10 feet) long by 9.5 mm (3/8") duct section was made similar to that described in Example 2, except the resin system used consisted of the 71% solids resin (Part A) shown in Table 2 with Parts B and C consisting of methyl formcel as previously described being 55% formaldehyde, 35% methanol and 10% methoxy methanol. The part cured at ambient temperature and was very rigid when removed from the mold.

### Example 10

A part 213.4 cm (84") in diameter by 3m (10 feet) long by 9.5 mm (3/8") thick was made as described in Example 9, except Parts B and C were Methaform, consisting of 55% formaldehyde, 35% methanol and 10% water. It was cured at room temperature and was equally rigid and as commercially viable as Example 9.

### Example 11

A 213.4 cm (84") diameter by 3 m (10 feet) long by 9.5 mm (3/8") thick duct section as made. The resin mix was 100 parts of 71% solids Part A of Table 2, 15 parts of liquid parts B and C, using methyl Formcel. A layer of chemical resistive grade glass veil (known usually as "C" glass veil) were saturated with the resin mix. Two layers of polyester veil are each saturated with the resin mixture, and then a single layer of random glass mat was saturated with the mixture. A batch of the resin mixture was put into a suitable container known as a tub or a bath, through which 32 strands of glass fiber filament winding roving were drawn and were then gathered into a narrow band. The band was applied both circumferentially and helically on top of the prior glass materials, until all of the surfaces were thoroughly covered with the resin, incorporating the filament-wound glass fibers. Thereafter, a thin woven roving of glass fiber, commonly known as boat cloth, was placed over the filament winding, and then a final layer of resin saturated "C" glass veil was applied.

During the process it was noted that each of the materials was easily saturated with the resin mixture and that there was no problem in pulling the 32 strands of filament through the resin bath and of winding it on the duct. The resultant product was then allowed to cure at room temperature, and the part was taken out of the mold at that time. The result was a duct of great structural strength and rigidity.

After the 2134 x 3000 x 9.5 mm (84" x 10' x 3/8") part was demolded a 137.2 cm (54") diameter by 90-degree conical tap tapering at the intersection to 225 cm (7-1/2 feet) wide was applied to the 213.4 cm (84") diameter duct. The resin used was the 64% solids material of Table 2. The part A was exactly as shown in Table 2. Part B was 10 parts paraformaldehyde. The resultant resin mixture was used to saturate random glass mat to bond the top to the main.

When cured, the finished product was rigid and commercially viable. A propane torch was applied to cutouts from the duct, and they did not burn or smoke.

### Example 12

Example 11 was repeated up to the demolding and the bonding of the 137.2 cm (54") conical top. At that stage, the resin used was the same as that used to make the 213.4 cm (84") product, using methyl Formcel. The results were the same as those described in Example 11.

## Claims

1. A method of making a reinforced, fire-resistive, resinous structural material exhibiting good heat release, low flame spread and low smoke evolution (i.e. meeting the standards according to ASTM-E 84) when exposed to direct flame or to radiant heat and being resistant to embrittlement and cracking upon curing, comprising
(1) preparing a novolac resin-composition consisting essentially of
(a) a hydroxy-group-providing component chosen from the group consisting of resorcinol and a mixture of resorcinol and phenol containing not over 2 mols phenol per 1 mol resorcinol,
(b) a solvent-carried first aldehyde component whereby enough aldehyde is provided with respect to said component (a), to produce a novolac resin therewith, having a solids content of 64 - 83% non-volatiles and a viscosity of 0.3 - 3 Pa.s (300 - 3000 centipoises),
(2) Adding to said novolac resin
(c) an organic viscosity-reducing solvent for reducing the viscosity of the mixture of a mixture of (a), (b), and (c) to a viscosity between 0.25 and 0.55 Pa.s (250 and 550 cps), and
(d) a second aldehyde component to bring the components (a), (b), and (c) to a prompt cure, and said aldehyde solids being present in an amount of from 5% to 12% by weight of the total of said components (a) and (b),
without reducing the solids content by more than 3%,
(3) saturating a substantially non-flammable fibrous reinforcement material with the resinous material resulting from step (2),
(4) pressing said saturated fibrous reinforcing material to remove air and excess resinous composition, and (5) curing said resin remaining in said saturated fibrous reinforcing material, at from room temperature to 105°C., to form said structural material.

2. The method of claim 1 comprising adding ingredient (c) to (a) and (b) simultaneously while adding (d).

3. The method of claim 1 comprising adding ingredient (c) to ingredients (a) and (b) before and separately from ingredient (d).

4. The method of claim 1 wherein said viscosity reducing solvent and said second aldehyde compound are added simultaneously before adding ingredients (a) and (b).

5. The method of claim 1 wherein said viscosity-reducing solvent is a mixture of methanol and methoxymethanol.

6. The method of claim 1 wherein said viscosity-reducing solvent is a mixture of methanol and water.

7. The method of claim 1 comprising between steps (4) and (5) forming said saturated fibrous reinforcing material into a tubular shape.

8. The method of claim 1 wherein said reinforcing material is glass fibers.

9. The method of claim 1 wherein said reinforcing material is graphite fibers or carbon fibers.

10. The method of claim 1 wherein said reinforcing material comprises a layer of fiberglass woven roving disposed between two layers of fiberglass mat, said reinforcing material being laminated with said resin.

11. A method of making a fire-resistive shaped product as defined in claim 1 including tanks, ducts and pipes, which comprises:
(1) coating glass-fiber roving with an admixture of resorcinol or phenol-resorcinol and aldehyde and organic viscosity reducer at a solids content higher than 60% and a viscosity between 0.25 and 0.55 Pa.s (250 and 550 centipoises),
(2) forming filaments of such coated roving,
(3) winding said filaments on a form or mold to produce a shaped product,
(4) curing said admixture to form of said admixture a tough, fire-resistive shaped product exhibiting low flame spread and low smoke evolution when exposed to direct flame and being resistant to embrittlement and cracking upon curing, and
(5) removing said cured product from said form or mold.

12. A method of making a fire-resistive duct as defined in claim 1 which comprises
coating glass roving with an admixture consisting essentially of:
(a) a partially cured resin of phenol, resorcinol and formaldehyde or paraformaldehyde (b) aldehyde, and (c) a viscosity-reducing organic solvent for resulting in a high solids content of more than 60% nonvolatiles at a viscosity, between 0.25 and 0.55 Pa.s (250 and 550 centipoises),
said aldehyde being added in sufficient amounts to equal or to exceed one mole ratio with respect to the phenolic hydroxyl radicals available to produce, after curing, a tough, fire-resistive coating,
forming filaments of such coated roving,
spiral winding said filaments to form said duct and allowing said coating to cure to form a tough, fire-resistive duct exhibiting low flame spread, and low smoke evolution when exposed to direct flame or to radiant heat and being resistant to embrittlement and cracking upon curing.

13. A method of making a fire-resistive shaped product as defined in claim 11 which comprises:
(1) incorporating a reinforcing agent in an admixture consisting essentially of:
(a) a hydroxyl-group-providing component chosen from the group consisting of resorcinol and a mixture of resorcinol and phenol containing not over 2 mols phenol per mol resorcinol,
(b) an aldehyde component providing an amount of total aldehyde in excess of 1 mol ratio with respect to the hydroxyl groups available in said component (a), and
(c) a lower-alcohol-containing, resin-viscosity-reducing organic solvent for the admixture to provide a non-volatile content greater than 60% of said admixture at a viscosity between 0.25 and 0.55 Pa.s. (250 and 550 centipoises),
(2) forming such incorporated agent and resin admixture into a desired shape, and
(3) curing said admixture to form a fire-resistive shaped product exhibiting low flame spread, and low smoke evolution when exposed to direct flame and being resistant to embrittlement and cracking upon curing.

14. Method as in claim 13 wherein said resinous structural material is cured at room temperature to 93°C.

15. The method of claim 1 including the step of forming a shaped hollow article comprising wound glass filaments formed of rovings coated with said resinous composition.

16. Method of making a construction panel by laminating a glass cloth and a resinous composition as prepared in claim 1.

## Patentansprüche

1. Verfahren zum Herstellen eines verstärkten, feuerhemmenden, harzartigen Baumaterials, das eine gute Wärmeabgabe, eine niedrige Flammenausbreitung und eine niedrige Rauchentwicklung zeigt (d.h. der Norm nach ASTM-E 84 genügt), wenn es einer direkten Flamme oder einer Wärmestrahlung ausgesetzt wird, und das nach dem Aushärten versprödungs- und rißbildungsbeständig ist, bei dem
(1) ein Novolakharzgemisch zubereitet wird, das im wesentlichen aus
(a) einem eine Hydroxylgruppe liefernden Anteil, der aus der Gruppe gewählt ist, die aus Resorcin und einem Gemisch von Resorcin und Phenol mit nicht mehr als zwei Mol Phenol pro einem Mol Resorcin besteht, und
(b) einem in einem Lösungsmittel gelöst gehaltenen ersten Aldehydanteil besteht, wobei bezüglich des Anteils (a) genügend Aldehyd vorgesehen ist, um damit ein Novolakharz zu bilden, das einen Feststoffanteil von 64-83% nicht flüchtiger Stoffe und eine Viskosität von etwa 0,3-3 Pa (300-3000 Zentipoise) hat,
(2) dem Novolakharz
(c) ein organisches die Viskosität herabsetzendes Lösungsmittel zum Herabsetzen der Viskosität des Gemisches aus einer Mischung von (a), (b) und (c) auf eine Viskosität zwischen 0,25 und 0,55 Pa (250 und 550 cps) und
(d) ein zweiter Aldehydanteil zugegeben wird, um die Anteile (a), (b) und (c) zu einem unmittelbaren Aushärten zu bringen, wobei die Aldehydfeststoffe in einem Gewichtsanteil von 5%-12% des Gesamtgewichtes der Anteile (a) und (b) vorliegen, ohne der Feststoffanteil um mehr als 3% verringert wird,
(3) ein im wesentlichen nicht entflammbares Faserverstärkungsmaterial mit dem sich aus dem Schritt (2) ergebenden harzartigen Material gesättigt wird,
(4) das gesättigte Faserverstärkungsmaterial verpreßt Wirt, um Luft und einen Barzgemischüberschuß zu entfernen, und
(5) das in dem gesättigten Faserverstärkungsmaterial verbleibende Harz bei einer Temperatur zwischen Raumtemperatur und 105°C ausgehärtet wird, um das Baumaterial zu bilden.

2. Verfahren nach Anspruch 1, bei dem der Zusatz (c) den Anteilen (a) und (b) gleichzeitig mit der Zugabe von (d) zugegeben wird.

3. Verfahren nach Anspruch 1, bei dem der Zusatz (c) vor dem Zusatz (d) und getrennt davon den Anteilen (a) und (b) zugegeben wird.

4. Verfahren nach Anspruch 1, bei dem das die Viskosität herabsetzende Lösungsmittel und der zweite Aldehydanteil gleichzeitig zugegeben werden, bevor die Zusätze (a) und (b) zugegeben werden.

5. Verfahren nach Anspruch 1, bei dem das die Viskosität herabsetzende Lösungsmittel ein Gemisch aus Methanol und Methoxymethanol ist.

6. Verfahren nach Anspruch 1, bei dem das die Viskosität herabsetzende Lösungsmittel ein Gemisch aus Methanol und Wasser ist.

7. Verfahren nach Anspruch 1, bei dem zwischen den Schritten (4) und (5) dem gesättigten Faserverstärkungsmaterial eine Rohrform gegeben wird.

8. Verfahren nach Anspruch 1, bei dem das Verstärkungsmaterial Glasfaser ist.

9. Verfahren nach Anspruch 1, bei dem das Verstärkungsmateril Graphitfaser oder Kohlenstoffaser ist.

10. Verfahren nach Anspruch 1, bei dem das Verstärkungsmaterial eine Schicht aus gewebtem Glasfaser-Roving umfaßt, die zwischen zwei Schichten aus Glasfasermatten angeordnet wird, wobei das Verstärkungsmaterial mit dem Harz laminiert wird.

11. Verfahren zum Herstellen eines feuerhemmenden, geformten Produktes nach Anspruch 1 einschließlich Behältern, Leitungen und Rohren, bei dem
(1) ein Glasfaser-Roving mit einem Gemisch aus Resorcin oder Phenol-Resorcin und Aldehyd und einem organischen Viskositätsminderungsmittel bei einem Feststoffgehalt von mehr als 60% und einer Viskosität zwischen 0,25 und 0,55 Pa (250 und 550 Zentipoise) beschichtet wird,
(2) Fäden aus diesem beschichteten Roving gebildet werden,
(3) die Fäden auf eine Form oder einen Formkörper gewikkelt werden, um ein geformtes Produkt zu erzeugen,
(4) das Gemisch ausgehärtet wird, um aus dem Gemisch ein festes, feuerhemmendes, geformtes Produkt zu bilden, das eine niedrige Flammenausbreitung und eine niedrige Rauchentwicklung zeigt, wenn es einer direkten Flamme ausgesetzt wird, und das nach dem Aushärten versprödungs- und rißbildungsbeständig ist, und
(5) das ausgehärtete Produkt von der Form oder dem Formkörper abgenommen wird.

12. Verfahren zum Herstellen einer feuerhemmenden Leitung bei dem
ein Glasroving mit einem Gemisch beschichtet wird, das im wesentlichen aus
(a) einem teilweise ausgehärteten Harz aus Phenol, Resorcin und Formaldehyd oder Paraformaldehyd, (b) Aldehyd und (c) einem die Viskosität herabsetzenden organischen Lösungsmittel besteht, so daß sich ein hoher Feststoffanteil von mehr als 60% nicht flüchtiger Stoffe bei einer Viskosität zwischen 0,25 und 0,55 Pa (250 und 550 Zentipoise) ergibt,
der Aldehyd in ausreichender Menge im Verhältnis vor einem Mol oder mehr bezüglich der verfügbaren Phenolhydroxylradikale zugegeben wird, um nach dem Aushärten eine feste feuerhermmende Beschichtung zu bilden,
aus einem derartigen beschichteten Roving Fäden gebildet werden,
diese Fäden spriralförmig aufgewickelt werden, um eine Leitung zu bilden, und die Beschichtung aushärten gelassen wird, um eine feste feuerhemmende Leitung zu bilden, die eine niedrige Flammenausbreitung und eine niedrige Rauchentwicklung zeigt, wenn sie einer direkten Flamme oder einer Wärmestrahlung ausgesetzt wird, und die nach dem Aushärten versprödungs- und rißbildungsbeständig ist.

13. Verfahren zum Herstellen eines feuerhemmenden, geformten Produktes nach Anspruch 11, bei dem
(1) ein Verstärkungsmittel in ein Gemisch eingegeben wird, das im wesentlichen aus
(a) einem eine hydroxylgruppe liefernden Anteil, der aus der Gruppe gewählt ist, die aus Resorcin und einem Gemisch aus Resorcin und Phenol mit nicht mehr als 2 Mol Phenol pro Mol Resorcin besteht,
(b) einem Aldehydanteil, der eine Gesamtmenge an Aldehyd in einem Verhältnis von mehr als einem Mol bezüglich der in dem Anteil (a) verfügbaren Hydroxylgruppen liefert, und
(c) einem einen niedrigeren Alkohol enthaltenden, die Harzviskosität herabsetzenden organischen Lösungsmittel für den Gemisch besteht, um einen Anteil an nicht flüchtigen Stoffen von mehr als 60% des Gemisches bei einer Viskosität zwischen 0,25 und 0,55 Pa (250 und 550 Zentipoise) zu liefern,
(2) diesem Harzgemisch und dem eingegebenen Mittel die gewünschte Form gegeben wird und
(3) das Gemisch ausgehärtet wird, um ein feuerhemmendes geformtes Produkt zu bilden, das eine niedrige Flammenausbreitung und eine niedrige Rauchentwicklung zeigt, wenn es einer direkten Flamme ausgesetzt wird, und das nach dem Aushärten versprödungs- und rißbildungsbeständig ist.

14. Verfahren nach Anspruch 13, bei dem das harzartige Baumaterial bei Raumtemperatur bis zu einer Temperatur von 93°C ausgehärtet wird.

15. Verfahren nach Anspruch 1, das den Schritt der Bildung eines geformten Hohlkörpers einschließt, der gewickelte Glasfäden umfaßt, die aus Rovings gebildet sind, die mit dem harzartigen Gemisch beschichtet sind.

16. Verfahren zum Herstellen einer Bauplatte, indem ein Glasgewebe und eine harzartige Mischung übereinander geschichtet werden, die nach Anspruch 1 gebildet wurde.

## Revendications

1. Procédé de fabrication d'un matériau de structure résineux, renforcé et résistant au feu, qui présente un bon débit calorifique, où les flammes se propagent lentement et qui émet peu de fumées (c'est-à-dire un matériau qui remplit les conditions stipulées dans la norme ASTM E-84) quand il est exposé à une flamme nue ou à de la chaleur radiative, et qui résiste bien à la fragilisation et à la fissuration après durcissement, lequel procédé comporte :
1) le fait de préparer une composition de résine novolaque, essentiellement constituée de
a) un composant apportant des groupes hydroxy, choisi parmi du résorcinol et un mélange de résorcinol et de phénol contenant au plus deux moles de phénol par mole de résorcinol,
et b) un premier composant aldéhyde, véhiculé par un solvant, apportant assez d'aldéhyde, par rapport au composant (a), pour former avec celui-ci une résine novolaque qui contient de 64 à 83 % de matières solides ou non-volatiles et dont la viscosité vaut de 0,3 à 3 Pa.s (de 300 à 3000 centipoises),
2) le fait d'ajouter à cette résine novolaque
c) un solvant organique abaissant la viscosité, pour abaisser la viscosité du mélange formé par les composants (a), (b) et (c) à une valeur de 0,25 à 0,55 Pa.s (de 250 à 550 cP),
et d) un deuxième composant aldéhyde, afin de faire durcir rapidement les composants (a), (b) et (c), la quantité présente d'aldéhydes solides représentant de 5 à 12 % du poids total des composants (a) et (b),
mais sans réduire de plus de 3 % la teneur en matières solides,
3) le fait de saturer un matériau fibreux de renfort, pratiquement ininflammable, de la matière résineuse issue de l'étape (2),
4) le fait de presser ce matériau fibreux de renfort saturé, pour en faire sortir l'air et l'excès de composition résineuse, et
5) le fait de faire durcir la résine restant dans le matériau fibreux de renfort saturé, à une température valant de la température ambiante à 105 °C, pour former ledit matériau de structure.

2. Procédé conforme à la revendication 1, qui comporte le fait d'ajouter l'ingrédient (c) aux ingrédients (a) et (b) tout en ajoutant simultanément l'ingrédient (d).

3. Procédé conforme à la revendication 1, qui comporte le fait d'ajouter l'ingrédient (c) aux ingrédients (a) et (b) séparément de l'ingrédient (d), avant celui-ci.

4. Procédé conforme à la revendication 1, dans lequel on ajoute simultanément ledit solvant abaissant la viscosité et ledit deuxième composant aldéhyde, avant d'ajouter les ingrédients (a) et (b).

5. Procédé conforme à la revendication 1, dans lequel ledit solvant abaissant la viscosité est un mélange de méthanol et de méthoxyméthanol.

6. Procédé conforme à la revendication 1, dans lequel ledit solvant abaissant la viscosité est un mélange de méthanol et d'eau.

7. Procédé conforme à la revendication 1, qui comporte, entre les étapes (4) et (5), le fait de façonner ledit matériau fibreux de renfort saturé en un objet de forme tubulaire.

8. Procédé conforme à la revendication 1, dans lequel ledit matériau de renfort est constitué de fibres de verre.

9. Procédé conforme à la revendication 1, dans lequel ledit matériau de renfort est constitué de fibres de graphite ou de fibres de carbone.

10. Procédé conforme à la revendication 1, dans lequel ledit matériau de renfort est constitué d'une couche de tissu de stratifils de fibres de verre, disposée entre deux couches de mat de fibres de verre, ce matériau de renfort étant stratifié avec ladite résine.

11. Procédé, conforme à la revendication 1, de fabrication d'un article façonné résistant au feu, y compris réservoirs, canalisations et tuyaux, lequel procédé comporte :
1) le fait d'enduire un stratifil de fibres de verre d'un mélange de résorcinol ou de phénol/résorcinol, d'aldéhyde et d'un agent organique abaissant la viscosité, dont la teneur en solides vaut plus de 60 % et dont la viscosité vaut de 0,25 à 0,55 Pa.s (de 250 à 550 centipoises),
2) le fait de former des filaments de ce stratifil enduit,
3) le fait d'enrouler ces filaments sur une forme ou un moule, pour en faire un article façonné,
4) le fait de faire durcir ledit mélange, pour faire avec ce mélange un article façonné tenace et résistant au feu, où les flammes se propagent lentement et qui émet peu de fumées quand il est exposé à une flamme nue, et qui résiste bien à la fragilisation et à la fissuration après durcissement, et
5) le fait d'enlever ledit article durci de ladite forme ou dudit moule.

12. Procédé, conforme à la revendication 1, de fabrication d'une canalisation résistante au feu, lequel procédé comporte
- le fait d'enduire un stratifil de verre d'un mélange essentiellement constitué de
a) une résine de phénol, résorcinol et formaldéhyde ou paraformaldéhyde, partiellement durcie,
b) un aldéhyde,
et c) un solvant organique abaissant la viscosité, de façon que la teneur en matières solides ou non-volatiles soit élevée, supérieure à 60 %, pour une viscosité valant de 0,25 à 0,55 Pa.s (de 250 à 550 centipoises),
ledit aldéhyde étant ajouté en une quantité suffisante pour que le rapport molaire de cet aldéhyde aux groupes hydroxy phénoliques disponibles soit supérieur ou égal à 1, de manière à donner, après durcissement, un revêtement tenace et résistant au feu,
- le fait de former des filaments de ce stratifil ainsi enduit, et
- le fait d'enrouler ces filaments en hélice, de manière à former ladite canalisation, et de faire durcir ledit revêtement, pour façonner une canalisation tenace et résistante au feu, où les flammes se propagent lentement et qui émet peu de fumées quand elle est exposée à une flamme nue ou à de la chaleur radiative, et qui résiste bien à la fragilisation et à la fissuration après durcissement.

13. Procédé, conforme à la revendication 1, de fabrication d'un article façonné résistant au feu, lequel procédé comporte :
1) le fait d'incorporer un élément de renfort dans un mélange essentiellement constitué de
a) un composant apportant des groupes hydroxy, choisi parmi du résorcinol et un mélange de résorcinol et de phénol contenant au plus deux moles de phénol par mole de résorcinol,
b) un composant aldéhyde, apportant une quantité totale d'aldéhyde telle que le rapport molaire de cet aldéhyde aux groupes hydroxy disponibles du composant (a) est supérieur ou égal à 1,
et c) un solvant organique abaissant la viscosité de la résine et contenant un alcool inférieur, de façon que le mélange contienne plus de 60 % de matières non-volatiles pour une viscosité valant de 0,25 à 0,55 Pa.s (de 250 à 550 centipoises),
2) le fait de façonner ledit élément incorporé et le mélange de résine en la forme voulue, et
3) le fait de faire durcir ledit mélange, pour obtenir un article façonné résistant au feu, où les flammes se propagent lentement et qui émet peu de fumées quand il est exposé à une flamme nue, et qui résiste bien à la fragilisation et à la fissuration après durcissement.

14. Procédé conforme à la revendication 13, dans lequel on fait durcir ledit matériau de structure résineux à une température qui vaut de la température ambiante à 93 °C.

15. Procédé conforme à la revendication 1, comprenant une étape où l'on forme un article creux façonné qui comporte des filaments de verre enroulés, constitués de stratifils enduits de ladite composition résineuse.

16. Procédé de fabrication d'un panneau de construction, par stratification d'un tissu de verre et d'une composition de résine préparée conformément à la revendication 1.
